(19) Europäisches Patentamt
European Patent Office
Office européen des brevets

(11) **EP 1 492 998 B1**

(12) **FASCICULE DE BREVET EUROPEEN**

(45) Date de publication et mention de la délivrance du brevet:
**09.01.2019 Bulletin 2019/02**

(21) Numéro de dépôt: **03735798.5**

(22) Date de dépôt: **02.04.2003**

(51) Int Cl.:
**G01C 21/16** *(2006.01)* **G01S 5/14** *(2006.01)*

(86) Numéro de dépôt international:
**PCT/FR2003/001025**

(87) Numéro de publication internationale:
**WO 2003/085357 (16.10.2003 Gazette 2003/42)**

(54) **DISPOSITIF DE CAPTURE DES MOUVEMENTS DE ROTATION D UN SOLIDE**

VORRICHTUNG ZUR AUFNAHME VON DREHBEWEGUNGEN EINES FESTKÖRPERS

DEVICE FOR ROTATIONAL MOTION CAPTURE OF A SOLID

(84) Etats contractants désignés:
**AT BE BG CH CY CZ DE DK EE ES FI FR GB GR HU IE IT LI LU MC NL PT RO SE SI SK TR**

(30) Priorité: **05.04.2002 FR 0204260**

(43) Date de publication de la demande:
**05.01.2005 Bulletin 2005/01**

(73) Titulaire: **Movea**
**38000 Grenoble (FR)**

(72) Inventeurs:
• **DAVID, Dominique**
**F-38640 Claix (FR)**

• **CARITU, Yanis**
**F-38100 Grenoble (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A- 0 646 696    WO-A-00/36376**
**DE-A- 3 446 658    US-A- 5 179 525**
**US-B1- 6 208 936**

## Description

### Domaine technique

La présente invention concerne un dispositif et un procédé de capture de l'orientation et du mouvement de rotation d'un solide. Les dispositifs de capture du mouvement, parfois désignés par « mocap », (de « motion capture » en anglais) trouvent des applications dans des domaines aussi variés que les domaines de la santé, le multimédia, la recherche minière ou la géophysique.

Dans le domaine d'application des jeux ou des simulations vidéo, les mouvements d'un utilisateur peuvent en effet être enregistrés pour la commande de systèmes immersifs de réalité virtuelle. A titre d'exemple, les mouvements d'un joueur peuvent être enregistrés pour commander l'évolution d'un personnage virtuel dans une scène de synthèse.

Dans le domaine de la santé, les dispositifs de capture de mouvement peuvent être utilisés pour positionner un outil de chirurgie ou bien pour surveiller l'évolution de l'autonomie des personnes fragiles en rendant compte de leur activité physique.

Dans le domaine de l'électronique portable, les dispositifs de capture de mouvement permettent aux appareils de s'adapter au contexte d'utilisation. Ils permettent, par exemple, d'optimiser la réception, d'un téléphone portable par la connaissance de son orientation, ou d'améliorer les interfaces des assistants personnels.

### Etat de la technique antérieure

Les capteurs de mouvement, et plus précisément les capteurs de position angulaire, sont fortement miniaturisés et font l'objet de recherches pour leur conférer une robustesse et un coût compatibles avec des applications visant le grand public.

La position d'un solide dans l'espace est entièrement déterminée par la connaissance de six grandeurs. Parmi celles-ci on distingue trois grandeurs susceptibles de traduire des translations et trois autres grandeurs susceptibles de traduire des rotations. Les trois dernières grandeurs correspondent à des positions angulaires. Celles-ci peuvent être utilisées pour déterminer des mouvements dits de lacet de tangage et de roulis.

Selon les applications envisagées, il n'est pas toujours nécessaire de disposer de l'ensemble des six grandeurs associées à six degrés de liberté. Un nombre plus restreint de données peut en effet suffire dans un grand nombre de cas.

On connaît principalement deux types de capteurs susceptibles de détecter la position angulaire ou la rotation d'un solide. Il s'agit d'une part des capteurs sensibles à un champ magnétique, tels que les magnétomètres, et d'autre part des capteurs sensibles à une accélération, tels que des accéléromètres. De façon avantageuse, les accéléromètres peuvent mesurer des accélérations quelconques du solide, donc par exemple, des modifications de l'orientation du solide par rapport à la direction du champ de gravité terrestre.

Les magnétomètres peuvent être utilisés en combinaison avec une source de champ magnétique artificielle. On préfère toutefois faire appel à des magnétomètres susceptibles de détecter l'orientation du solide par rapport au champ magnétique terrestre. On considère bien sûr que les directions du champ magnétique et de l'accélération de la pesanteur ne sont pas colinéaires.

Les capteurs peuvent être du type à axe unique, c'est-à-dire sensibles selon une direction unique de l'espace. Cependant, on utilise de préférence des capteurs à deux ou à trois axes non parallèles. Ceux-ci délivrent alors des valeurs de mesure permettant de connaître de façon complète une position angulaire d'un solide dont ils sont solidaires.

Les capteurs délivrent un signal de mesure M qui est relié à leur inclinaison I par une fonction f telle que :

$$M = f(I).$$

L'inclinaison est considérée ici par rapport à une position angulaire de référence. Celle-ci peut être arbitraire ou ajustée sur le champ magnétique ou le champ de gravitation terrestre. La grandeur que l'on souhaite connaître est l'inclinaison I. Celle-ci peut être retrouvée par calcul selon une formule $I = f^{-1}(M)$.

La fonction inverse $f^{-1}$ est cependant difficile à établir avec exactitude. De plus, elle souffre de discontinuités et de non-linéarités. Une difficulté tient par exemple au fait que les capteurs utilisant le champ de la pesanteur permettent certes de retrouver à tout instant des rotations autour d'axes horizontaux mais non autour de la direction de la pesanteur. Il en va de même pour les magnétomètres qui ne sont efficaces que pour mesurer des rotations dont l'axe n'est pas confondu avec la direction du champ magnétique utilisé comme référence. Des non-linéarités proviennent aussi des fonctions trigonométriques mises en jeu par le calcul de la fonction inverse.

Des inexactitudes supplémentaires proviennent du fait que les capteurs à trois axes ne présentent pas toujours une relation angulaire très précise entre les axes. Par exemple, les axes ne sont pas exactement orthogonaux.

Une illustration de l'état de la technique peut encore être trouvée dans les documents (1) à (4) dont les références sont précisées à la fin de la présente description.

La notion de comparaison entre des valeurs d'orientation et une valeur de référence peut être trouvée dans le document WO 00/36376.

### Exposé de l'invention

L'invention a pour but de proposer un dispositif et un procédé de capture de l'orientation d'un solide ne présentant pas les limitations et difficultés évoquées ci-dessus.

Un but est en particulier de proposer un tel dispositif qui soit peu coûteux et susceptible d'être intégré dans des équipements destinés à un large public.

Un but est encore de proposer un dispositif fiable, peu sensible à des phénomènes de non-linéarité affectant les mesures, et permettant de prendre en compte directement d'éventuelles imperfections des capteurs.

Pour atteindre ces buts, l'invention concerne plus précisément un dispositif de capture de l'orientation d'un solide selon la revendication 1.

Dans la description qui suit, il est fait référence à l'orientation d'un solide. Le solide ne fait cependant pas partie du dispositif de capture. L'orientation correspond plus précisément à celle du ou des capteurs susceptibles d'être fixés au solide. Par ailleurs, les termes orientation et position angulaire sont utilisés comme synonymes. Grâce au dispositif de l'invention, il est possible d'affiner successivement l'estimation de l'orientation du solide.

Après une ou plusieurs modifications de l'orientation estimée, celle-ci converge vers l'orientation effective du solide, ou, plus précisément, vers l'orientation mesurée. Ainsi, le dispositif de l'invention ne nécessite pas de moyens de calcul pour établir l'orientation ou l'inclinaison du solide sur la base d'une fonction (inverse) des données de mesure des capteurs.

Le dispositif de l'invention permet de prendre directement en compte les imperfections des capteurs et permet de s'affranchir des comportements non linéaires de ceux-ci. A titre d'exemple, l'utilisation de capteurs à trois axes sensibles non orthogonaux est possible.

Selon une réalisation particulière du dispositif, les moyens de modification de l'orientation estimée peuvent comporter un premier comparateur relié d'une part au capteur et d'autre part au moyen générateur de données de test. Le premier comparateur reçoit ainsi la donnée de mesure et une donnée de test, et peut établir au moins une différence entre la donnée de test et la donnée de mesure.

La différence entre la donnée de test et la donnée de mesure constitue une mesure de la pertinence de l'orientation estimée.

La corrélation entre l'orientation estimée et la donnée de test générée peut être donnée, par exemple, par une fonction directe f telle qu'évoquée dans la partie introductive de la description. Il s'agit, par exemple, d'une simple fonction de modélisation du comportement des capteurs.

La différence entre chacune des données de test successives et la donnée de mesure peut aussi être mise à profit pour contrôler la nécessité ou non d'affiner encore l'orientation estimée. Ainsi, le dispositif peut comporter un deuxième comparateur à seuil pour comparer la différence établie par le premier comparateur à une valeur de seuil et pour valider l'orientation estimée, lorsque la différence établie par le premier comparateur pour une valeur de test donnée est inférieure à la valeur de seuil.

Lorsque la différence reste trop importante une nouvelle estimation de l'orientation est entreprise.

Les moyens de modification de l'orientation estimée et/ou les moyens générateurs d'une donnée de test peuvent comporter un calculateur pour établir une nouvelle orientation estimée et/ou une nouvelle donnée de test selon une méthode dite de descente de gradient d'erreur.

Par ailleurs, les moyens générateurs de données de test peuvent comporter un calculateur pour calculer des données de test en fonction d'une orientation estimée, et en fonction de paramètres caractéristiques d'une réponse du capteur de position angulaire.

Le dispositif de l'invention peut comporter un ou plusieurs capteurs de position angulaire sensibles à la gravité et un ou plusieurs capteurs de position angulaire sensibles à un champ magnétique.

De façon plus générale, d'autres capteurs sont susceptibles de donner des informations sur leur position angulaire par rapport à une direction de référence de l'espace.

Par exemple, il existe des capteurs aptes à mesurer un gradient de température, un gradient de pression, des capteurs d'image (visible ou thermique).

A titre d'exemple, le capteur sensible à la gravité peut comprendre au moins un accéléromètre et le capteur sensible à un champ magnétique peut comprendre au moins un magnétomètre.

Afin de mesurer la position angulaire de façon la plus complète et la mieux déterminée, le dispositif est de préférence équipé de deux capteurs ayant chacun trois axes de sensibilité.

L'invention concerne également un dispositif de capture du mouvement de rotation d'un solide comprenant un dispositif de capture de l'orientation tel que décrit ci-dessus et des moyens pour enregistrer des estimations successives de l'orientation du solide. Il s'agit, par exemple, d'une mémoire. Le dispositif peut comporter aussi une horloge pour cadencer l'enregistrement des estimations successives de l'orientation du solide. L'horloge permet également d'établir des vitesses et des accélérations angulaires, si nécessaire.

Le calcul du mouvement peut avoir lieu dans le calculateur et selon des lois classiques de la cinétique d'un solide.

L'invention concerne encore un procédé d'estimation de l'orientation d'un solide comprenant les étapes suivantes :

a) la saisie d'au moins une donnée de mesure en provenance d'au moins un capteur de position angulaire et l'établissement d'au moins une donnée de test représentative d'une orientation estimée du capteur,

b) la confrontation de la donnée de test et de la donnée mesurée,

c) l'établissement d'au moins une nouvelle donnée de test représentative d'une nouvelle orientation estimée du solide, corrigée en fonction de la confrontation précédente,

d) la répétition des étapes b) et c).

On peut itérer les étapes b) et c) jusqu'à ce que la confrontation révèle une différence entre la donnée de test et la donnée de mesure inférieure à un seuil déterminé.

La confrontation des données peut comporter leur comparaison ou le calcul d'une différence, comme indiqué précédemment.

L'invention se distingue des dispositifs de l'état de la technique par le fait que la détermination de l'orientation ne se fait pas nécessairement dans un temps constant. Dans les dispositifs de l'état de la technique, la détermination de l'orientation est effectuée dans un temps fixe correspondant au temps de calcul nécessaire. Dans le cas d'une confrontation itérative telle qu'indiquée ci-dessus, le temps pris par la détermination de l'orientation est, par exemple, lié à la pertinence de l'estimation initiale de l'orientation et la vitesse de convergence des estimations successives. En d'autres termes, le temps mis pour la détermination de l'orientation dépend du nombre de répétitions des étapes b) et c). Le temps de traitement ne constitue toutefois pas un obstacle pour la mise en oeuvre du procédé. En effet les mesures réelles effectuées ne sont en effet que de l'ordre de 500 par capteur et par seconde. Il est ainsi possible d'effectuer plusieurs boucles d'estimation pour chaque mesure. Le nombre de boucles est en général inférieur à 30. Souvent, quelques boucles suffisent.

Comme indiqué précédemment, lors de l'étape c), on peut effectuer un calcul de corrélation selon une méthode de descente de gradient d'erreur. Bien que cela constitue une solution moins préférable, il est encore possible d'effectuer des estimations aléatoires.

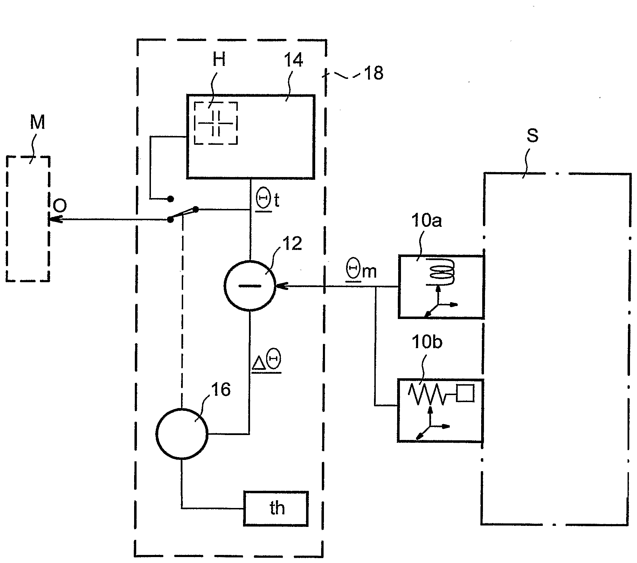

D'autres caractéristiques et avantages de l'invention ressortiront de la description qui va suivre, en référence à la figure du dessin annexé. Cette description est donnée à titre purement illustratif et non limitatif.

Description détaillée d'un mode de mise en oeuvre de l'invention.

Les références 10a et 10b indiquent respectivement un accéléromètre et un magnétomètre. Il s'agit de capteurs à trois axes de sensibilité, de type connu, susceptibles de délivrer des données de mesure représentatives de l'orientation, c'est-à-dire d'une position angulaire d'un solide S. Le solide S est indiqué sommairement en trait discontinu. Il s'agit par exemple d'une partie du corps humain dont on veut apprécier les mouvements, une souris informatique, un outil chirurgical, ....

Les mesures des capteurs, notées $\underline{\Theta}_m$, sont des grandeurs scalaires ou vectorielles. Elles sont représentatives, par exemple, d'angles de lacet, de roulis et de tangage ($\varphi$, $\psi$, $\theta$).

Ces mesures sont dirigées vers un comparateur 12. Il s'agit, dans l'exemple illustré, d'un différenciateur. Le comparateur 12 reçoit aussi une ou plusieurs données de test $\underline{\Theta}_t$ délivrées par un calculateur 14. La donnée de test peut être de type vectorielle et exprimer des angles selon plusieurs axes. Le calculateur 14 est utilisé comme moyen générateur de données de test. Les données de test sont représentatives d'une orientation estimée du solide qui peut être aléatoire ou non. Il s'agit, par exemple, de triplets d'angles de lacet, de roulis et de tangage ($\varphi$, $\psi$, $\theta$). Le calculateur peut être localisé sur le solide S.

Le comparateur délivre une différence $\Delta\Theta$, qui, selon un ou plusieurs axes, représente un écart entre l'orientation réelle, correspondant à la donnée de mesure, et l'orientation estimée correspondant à la donnée de test. Cet écart est utilisable pour affiner l'orientation estimée du capteur, et donc du solide auquel il est fixé.

Toutefois, il est possible de fixer un seuil th en delà duquel on considère que l'orientation estimée est suffisamment proche de l'orientation mesurée pour être validée. Ceci peut avoir lieu au moyen d'un deuxième comparateur 16 prévu pour comparer la différence $\Delta\Theta$ avec la valeur de seuil th.

Lorsque la différence est inférieure au seuil en valeur absolue la donnée de test $\Theta_t$, c'est-à-dire l'estimation de la position angulaire est dirigée vers une sortie O.

En revanche, lorsque la différence est supérieure au seuil, elle est dirigée vers le calculateur 14 pour effectuer une nouvelle estimation de la position. Les comparateurs 12 et 16 constituent ainsi avec le calculateur 14 des moyens 18 de modification de l'orientation estimée du solide 5.

La nouvelle estimation peut être aléatoire. Elle peut aussi être affinée selon un calcul de correction par la méthode de descente de gradient d'erreur. Cette méthode, connue en soi est illustrée par le document (4) dont les coordonnées sont précisées à la fin de la description et auquel on peut se référer pour compléter l'exposé.

Le deuxième comparateur peut éventuellement être éliminé. Dans ce cas, la valeur estimée est continuellement affinée jusqu'à la saisie d'une nouvelle valeur de mesure.

Le dispositif de la figure comprend des moyens, par exemple une mémoire, pour enregistrer les valeurs estimées successives, validées, en fonction de mesures successives de la position angulaire du solide. La mémoire M peut faire partie du calculateur et peut être localisée sur le solide S. Les valeurs successives permettent de calculer le mouvement de rotation du solide de même que ses vitesses et accélérations angulaires. Pour démarrer la mesure d'une nouvelle orientation du solide, la première donnée de test générée est avantageusement la valeur estimée validée de la position précédente.

La saisie de valeurs de mesure par les capteurs, et l'enregistrement des valeurs estimées dans la mémoire M peuvent être cadencés par une horloge H.

Contrairement au procédé de l'art connu à inversion directe, le procédé de capture de l'orientation d'un solide selon l'invention permet l'utilisation d'un nombre quelconque de capteurs, sous réserve que ce nombre soit supérieur au nombre de variables d'angle I à estimer (le nombre de variables d'angle I à estimer est compris entre 1 et 3). Selon la qualité souhaitée de l'estimation, un dispositif selon l'invention peut alors comprendre le nombre minimal de capteurs nécessaire ou un nombre de capteurs supérieur au nombre minimal (redondance).

Selon un perfectionnement de l'invention, la contribution de chaque capteur peut être pondérée. Il est alors établi un critère de confiance ou poids Cm qui est associé à chaque composante de la mesure $\Theta_m$ afin de prendre cette dernière plus ou moins en compte dans l'algorithme de recherche des angles. Le calcul d'un poids Cm est établi selon les règles suivantes :

- a) le poids Cm a une valeur égale à 1 par défaut,
- b) le poids Cm prend la valeur 0 dans le cas où la mesure délivrée est une valeur aberrante (saturation, valeur traduisant un mauvais fonctionnement, etc.),
- c) le poids Cm a une valeur égale à 0 lorsque le niveau de bruit mesuré par le capteur dépasse un certain seuil, une valeur intermédiaire variant linéairement de 0 à 1 pouvant être appliquée pour des valeurs de bruit variant de la valeur du seuil à une valeur de bruit considérée comme négligeable,
- d) la confiance est réduite sur les accéléromètres si l'accélération totale mesurée s'éloigne en norme de la valeur de la pesanteur,
- e) la confiance est réduite sur les magnétomètres si les magnétomètres enregistrent une variation trop importante de leur norme (on peut alors soupçonner la présence d'objet(s) ferromagnétique(s) à proximité du capteur).

En l'absence de pondération, pour une itération effectuée par le calculateur 14, la modification d'un angle de test I est liée à la grandeur $S_I$ telle que :

$$S_I = \Sigma^N_{n=1} ( \alpha_{In} \Delta\Theta_n ),$$

où

n est l'indice d'un capteur,
N est le nombre de capteurs,
$\alpha_{In}$ est un paramètre relatif au capteur d'indice n, calculé de façon usuelle par la descente de gradient,
$\Delta\Theta_n$ est l'écart entre l'orientation réelle et l'orientation estimée du capteur d'indice n.

L'introduction d'un poids $Cm_n$ relatif au capteur d'indice n modifie alors l'expression de la grandeur $S_I$ comme suit :

$$S_I = \Sigma^N_{n=1} Cm_n ( \alpha_{In} \Delta\Theta_n )$$

De façon générale, les valeurs d'un poids $Cm_n$ peuvent évoluer continûment entre la valeur 1 (confiance totale sur la mesure effectuée par le capteur d'indice n) et la valeur 0 (absence totale de confiance sur la mesure effectuée par le capteur d'indice n, la mesure effectuée par le capteur d'indice n n'est pas prise en compte).

### DOCUMENTS CITES

*(1)* US-5 953 683, "Sourceless orientation sensor" de KOGAN Vladimir et al.
*(2)* US-6 702 708, "A miniature, sourceless, networked, solid state orientation module" de Christopher Townsend et al., MicroStrain Inc. 294 N. Winooski Ave., Burlington, VT 05401, USA
*(3)* "A miniature, sourceless, networked, solid state orientation module", de Christopher Townsend, David Guzik, Steven Arms, MicroStrain Inc., 294 N, Winooski Ave., Burlington, VT 05401. USA, pages 44 à 50.
*(4)* "Méthode de calcul numérique" de J.P. NOUGIER, 3ème édition 1987, Edition MASSON, pages 54-58.

## Revendications

1. Dispositif de capture de l'orientation d'un solide comprenant :

   - au moins un capteur (10a, 10b) de position angulaire, solidaire du solide et délivrant au moins une donnée de mesure ($\Theta_m$) étant fonction ($\Theta_m=f(I)$) de l'orientation du $\overline{\text{solide}}$, ledit capteur $\overline{\text{de position}}$ angulaire comprenant au moins un capteur de position angulaire (10b) sensible à la gravité et/ou au moins un capteur de position angulaire (10a) sensible à un champ magnétique,

   **caractérisé en ce que** le dispositif comprend également :

   - un moyen (14) générateur de données de test ($\Theta_t$) étant fonction d'une orientation estimée du $\overline{\text{solide}}$,
   - un moyen (18) de modification de l'orientation estimée du solide par confrontation de la donnée de mesure et de données de test.

**2.** Dispositif selon la revendication 1, dans lequel les moyens (18) de modification de l'orientation estimée comportent un premier comparateur (12) relié au capteur (10a, 10b) et au moyen générateur (14), pour recevoir la donnée de mesure et au moins une donnée de test, et pour établir au moins une différence ($\Delta\Theta$) entre la donnée de test et la donnée de mesure.

**3.** Dispositif selon la revendication 2, comprenant en outre un deuxième comparateur à seuil (16) pour comparer la différence établie par le premier comparateur (12) à une valeur de seuil (th) et pour valider l'orientation estimée, lorsque la différence établie par le premier comparateur est inférieure à la valeur de seuil.

**4.** Dispositif selon l'une des revendications précédentes, dans lequel le capteur sensible à la gravité comprend au moins un accéléromètre et le capteur sensible à un champ magnétique comprend au moins un magnétomètre.

**5.** Dispositif selon l'une des revendications précédentes, comprenant deux capteurs ayant chacun trois axes de sensibilité.

**6.** Dispositif selon la revendication 1, dans lequel les moyens (14) générateurs de données de test comportent un calculateur pour calculer des données de test en fonction d'une orientation estimée, et en fonction de paramètres caractéristiques d'une réponse du capteur de position angulaire.

**7.** Dispositif selon la revendication 6, dans lequel le calculateur est localisé sur le solide.

**8.** Dispositif selon la revendication 1, dans lequel les moyens (18) de modification de l'orientation estimée et/ou les moyens générateurs d'une donnée de test comportent un calculateur pour établir une nouvelle orientation estimée et/ou une nouvelle donnée de test selon une méthode dite de descente de gradient d'erreur.

**9.** Dispositif selon la revendication 8, dans lequel le calculateur est localisé sur le solide.

**10.** Dispositif de capture du mouvement de rotation d'un solide comprenant un dispositif de capture de l'orientation selon l'une quelconque des revendications précédentes et des moyens (M) pour enregistrer des estimations successives de l'orientation du solide.

**11.** Dispositif selon la revendication 10, dans lequel les moyens (M) pour enregistrer sont localisés sur le solide.

**12.** Dispositif selon la revendication 10, comprenant une horloge (H) pour cadencer l'enregistrement des estimations successives de l'orientation du solide.

**13.** Procédé d'estimation de l'orientation d'un solide sans calculer l'orientation du solide sur la base d'une fonction (inverse) des données de mesure des capteurs comprenant les étapes suivantes :

a) la saisie de données de mesure en provenance d'au moins un capteur de position angulaire (10a, 10b) solidaire du solide comprenant au moins un capteur de position angulaire (10b) sensible à la gravité et/ou au moins un capteur de position angulaire (10a) sensible à un champ magnétique et l'établissement d'une donnée de test représentative d'une orientation estimée du solide,
b) la confrontation de la donnée de test et la donnée mesurée,
c) l'établissement d'une nouvelle donnée de test représentative d'une nouvelle orientation estimée du solide, corrigée en fonction de la confrontation précédente,
d) la répétition des étapes b) et c).

**14.** Procédé selon la revendication 13, dans lequel les étapes b) et c) sont répétées jusqu'à ce que la confrontation révèle une différence entre la donnée de test et la donnée de mesure inférieure à un seuil déterminé.

**15.** Procédé selon la revendication 13, dans lequel lors de l'étape c), on effectue un calcul de correction selon une méthode dite de descente de gradient d'erreur.

**16.** Procédé selon la revendication 13, dans lequel la confrontation des données de test et de la donnée de mesure comprend l'établissement de données de différence ($\Delta\Theta$) entre des données de test successives et la donnée de mesure.

**17.** Procédé de capture de mouvement d'un solide, **caractérisé en ce qu'**on répète le procédé selon la revendication 13 avec des données de mesure successives.

**Patentansprüche**

**1.** Vorrichtung zur Aufnahme der Ausrichtung eines Festkörpers, Folgendes beinhaltend:

- mindestens einen Winkelposition-Sensor (10a, 10b), welcher fest mit dem Festkörper verbunden ist und mindestens ein Messdatum ($\Theta_m$) abgibt, welches von der Ausrichtung des Fest-

körpers abhängt ($\Theta_m$=f(I)), wobei der Winkelposition-Sensor mindestens einen Winkelposition-Sensor (10b) beinhaltet, welcher für Schwerkraft und/oder mindestens einen Winkelposition-Sensor (10a) empfindlich ist, welcher für ein Magnetfeld empfindlich ist, **dadurch gekennzeichnet, dass** die Vorrichtung zudem Folgendes beinhaltet:
- ein Mittel (14) zum Erzeugen von Testdaten ($\Theta_t$), welche von der geschätzten Ausrichtung des Festkörpers abhängen,
- ein Mittel (18) zum Ändern der geschätzten Ausrichtung des Festkörpers durch Konfrontation des Messdatums mit Testdaten.

2. Vorrichtung nach Anspruch 1, bei welcher die Mittel (18) zum Ändern der geschätzten Ausrichtung einen ersten Komparator (12) beinhalten, welcher mit dem Sensor (10a, 10b) und mit dem Mittel (14) zum Erzeugen verbunden ist, um das Messdatum und mindestens ein Testdatum zu empfangen, und um mindestens eine Differenz ($\Delta\Theta$) zwischen dem Testdatum und dem Messdatum zu ermitteln.

3. Vorrichtung nach Anspruch 2, zudem beinhaltend einen zweiten Grenzwert-Komparator (16) zum Vergleichen der durch den ersten Komparator (12) ermittelten Differenz mit einem Grenzwert (th) und zum Validieren der geschätzten Ausrichtung, wenn die durch den ersten Komparator ermittelte Differenz den Grenzwert unterschreitet.

4. Vorrichtung nach einem der vorhergehenden Ansprüche, bei welcher der für die Schwerkraft empfindliche Sensor mindestens einen Beschleunigungsmesser beinhaltet und der für ein Magnetfeld empfindliche Sensor mindestens ein Magnetometer beinhaltet.

5. Vorrichtung nach einem der vorhergehenden Ansprüche, beinhaltend zwei Sensoren, welche jeweils drei Empfindlichkeitsachsen besitzen.

6. Vorrichtung nach Anspruch 1, bei welcher die Mittel (14) zum Erzeugen von Testdaten einen Rechner zum Berechnen der Testdaten angesichts einer geschätzten Ausrichtung und angesichts von charakteristischen Parametern einer Antwort des Winkelposition-Sensors beinhalten.

7. Vorrichtung nach Anspruch 6, bei welcher der Rechner am Festkörper befindlich ist.

8. Vorrichtung nach Anspruch 1, bei welcher die Mittel (18) zum Ändern er geschätzten Ausrichtung und/oder die Mittel zum Erzeugen eines Testdatums einen Rechner beinhalten, um eine neue geschätzte Ausrichtung und/oder ein neues Testdatum nach einer Fehlergradientengefälle genannten Methode zu ermitteln.

9. Vorrichtung nach Anspruch 8, bei welcher der Rechner am Festkörper befindlich ist.

10. Vorrichtung zur Aufnahme der Drehbewegung eines Festkörpers, welche eine Vorrichtung zur Aufnahme der Ausrichtung nach einem der vorhergehenden Ansprüche und Mittel (M) zum Aufzeichnen aufeinanderfolgender Schätzungen der Ausrichtung des Festkörpers beinhaltet.

11. Vorrichtung nach Anspruch 10, bei welcher die Mittel (M) zum Aufzeichnen am Festkörper befindlich sind.

12. Vorrichtung nach Anspruch 10, beinhaltend eine Uhr (H) zum Takten der Aufzeichnung der aufeinanderfolgenden Schätzungen der Ausrichtung des Festkörpers.

13. Verfahren zum Schätzen einer Ausrichtung eines Festkörpers ohne Berechnen der Ausrichtung des Festkörpers auf der Grundlage einer (inversen) Funktion der Messdaten der Sensoren, welches folgende Schritte beinhaltet:

    a) die Erfassung von Messdaten, welche von mindestens einem Winkelposition-Sensor (10a, 10b) stammen, welcher fest mit dem Festkörper verbunden ist, der mindestens einen Winkelposition-Sensor (10b) beinhaltet, welcher für Schwerkraft und/oder mindestens einen Winkelposition-Sensor (10a) empfindlich ist, welcher für ein Magnetfeld empfindlich ist, und das Ermitteln eines Testdatums, welches eine geschätzte Ausrichtung des Festkörpers darstellt,
    b) die Konfrontation des Testdatums mit dem Messdatum,
    c) das Ermitteln eines neuen Testdatums, welches eine neue geschätzte Ausrichtung des Festkörpers darstellt, welche angesichts der vorherigen Konfrontation korrigiert wurde,
    d) die Wiederholung der Schritte b) und c).

14. Verfahren nach Anspruch 13, bei welchem die Schritte b) und c) wiederholt werden, bis die Konfrontation eine Differenz zwischen dem Testdatum und dem Messdatum ergibt, welche einen bestimmten Grenzwert unterschreitet.

15. Verfahren nach Anspruch 13, bei welchem man im Zuge von Schritt c) eine Korrekturberechnung nach einer Fehlergradientengefälle genannten Methode anstellt.

16. Verfahren nach Anspruch 13, bei welchem die Konfrontation des Testdatums und des Messdatums die Ermittlung von Differenzdaten (ΔΘ) zwischen aufeinanderfolgenden Testdaten und dem Messdatum beinhaltet.

**17.** Vorrichtung zur Aufnahme einer Bewegung eines Festkörpers, **dadurch gekennzeichnet, dass** man das Verfahren nach Anspruch 13 mit aufeinanderfolgenden Messdaten wiederholt.

**Claims**

**1.** Capture device of the orientation of a solid comprising:

at least one sensor (10a, 10b) of angular position, affixed to the solid and of supplying at least a measuring datum $(\Theta_m)$ representative $(\Theta_m = f(I))$ of the orientation of the solid, said sensor of angular position comprising at least one sensor of angular position (10b) being sensitive to gravity and/or at least one sensor of angular position (10a) sensitive to a magnetic field,
**characterized in that** the device further comprises:

means (14) for generating test data $(\Theta_t)$ representative of an estimated orientation of the solid,
means (18) for modifying the estimated orientation of the solid by confrontation of the test data and test data.

**2.** Device according to claim 1, wherein the means (18) for modifying the estimated orientation comprise a first comparator (12) connected to the sensor (10a, 10b) and to the means (14) for generating test data, for receiving the measuring datum and at least one test datum, and for establishing at least one difference $(\Delta\Theta)$ between the test datum and the measuring datum.

**3.** Device according to claim 2, further comprising a second comparator with a threshold (16) for comparing the difference established by the first comparator (12) to a threshold value (th) and to validate the estimated orientation, when the difference established by the first comparator is less than the threshold value.

**4.** Device according to any of the prededing claims, wherein the sensor sensitive to gravity comprises at least an acelerometer and the sensor sensitive to a magnetic field comprises at least a magnetometer.

**5.** Device according to any of the preceding claims, comprising two sensors each having three axes of sensitivity.

**6.** Device according to claim 1, wherein the means (14) for generating test data comprise a calculator for calculating test data as a function of an estimated orientation and as a function of parameters characteristic of a response of the angular position sensor.

**7.** Device according to claim 6, wherein the calculator is localised on the solid.

**8.** Device according to claim 1, wherein the means for modifying the estimated orientation and/or the calculation means for generating a test datum comprise a calculator for establishing a new estimated orientation and/or a new test datum according to said error gradient descent method.

**9.** Device according to claim 8, wherein the calculator is localised on the solid.

**10.** Device for capturing the rotation movement of a solid comprising an orientation capture device according to any of the preceding claims and means (M) for storing successive estimations of the orientation of the solid.

**11.** Device according to claim 10, wherein the means (M) for storing are localised on the solid.

**12.** Device according to claim 10, comprising a clock (H) for clocking the storing of the successive estimations of the orientation of the solid.

**13.** A process for estimation of the orientation of a solid without calculating the orientation of the solid based on a (reverse) function of the measuring data of the sensors comprising the following steps:

a) the collecting of measuring data from at least one angular position sensor (10a, 10b) affixed to the solid comprising at least one sensor of angular position (10b) being sensitive to gravity and/or at least one sensor of angular position (10a) sensitive to a magnetic field and the establishment of a test datum representative of an estimated orientation of the solid,
b) confrontatioon of the test datum and the measured datum,
c) establishment of a new test datum representative of a new estimated orientation of the solid, corrected as a function of the preceding confrontation.
d) repeating steps b) and c).

**14.** Process according to claim 13, wherein step b) and c) are repeated until the confrontation reveals a difference between the test data and the measuring datum less than a determined threshold.

**15.** Process according to claim 13, wherein during step c) correction calculation is made according to said error gradient descent method.

**16.** Process according to claim 13, wherein the confrontation of the test data and the measuring datum comprises the establishment of difference data ($\Delta\Theta$) between successive test data and the measuring datum.

**17.** Process for capturing the movement of a solid, **characterized in that** the process according to claim 13 is repeated with successive measuring data.

## RÉFÉRENCES CITÉES DANS LA DESCRIPTION

**Documents brevets cités dans la description**

- WO 0036376 A
- US 5953683 A
- US 6702708 B

**Littérature non-brevet citée dans la description**

- **CHRISTOPHER TOWNSEND et al.** A miniature, sourceless, networked, solid state orientation module. MicroStrain Inc,
- **CHRISTOPHER TOWNSEND ; DAVID GUZIK ; STEVEN ARMS.** A miniature, sourceless, networked, solid state orientation module. MicroStrain Inc, 44-50
- **J.P. NOUGIER.** Méthode de calcul numérique. MASSON, 1987, 54-58